Europäisches Patentamt

European Patent Office

Office européen des brevets

(19)

(11) Veröffentlichungsnummer: **0 121 038**
**B1**

## (12) EUROPÄISCHE PATENTSCHRIFT

(45) Veröffentlichungstag der Patentschrift:
20.04.88

(21) Anmeldenummer: 84100395.7

(22) Anmeldetag: 16.01.84

(51) Int. Cl.⁴: **G 06 F 9/38**

(54) **Speicherprogrammierbare Steuerung.**

(30) Priorität: 28.01.83 DE 3302902

(43) Veröffentlichungstag der Anmeldung:
10.10.84 Patentblatt 84/41

(45) Bekanntmachung des Hinweises auf die Patenterteilung:
20.04.88 Patentblatt 88/16

(84) Benannte Vertragsstaaten:
AT BE CH DE FR GB IT LI SE

(56) Entgegenhaltungen:
EP - A - 0 012 242
DE - A - 2 817 536
DE - A - 3 101 270

PATENTS ABSTRACTS OF JAPAN, Band 6, Nr. 62
(P-111)(940), 21. April 1982; JP-A-573139 (MITSUBISHI
DENKI K.K.) 08.01.1982

(73) Patentinhaber: **Siemens Aktiengesellschaft Berlin und
München, Wittelsbacherplatz 2, D-8000 München 2 (DE)**

(72) Erfinder: **Ninnemann, Peter, Dipl.-Ing., Kiebheimer
Strasse 6, D-8551 Röttenbach (DE)**
Erfinder: **Wollscheid, Dieter, Dipl.-Ing., Oppelner
Strasse 21, D-8520 Erlangen (DE)**

## Beschreibung

Die Erfindung bezieht sich auf eine speicherprogrammierbare Steuerung mit zyklisch durchlaufenem Anwenderprogramm, bestehend zumindest aus:

a) einem Wortprozessor zur Bearbeitung von Betriebssystem- und Wortbefehlen,

b) einem Bitprozessor zur Bearbeitung binärer Verknüpfungsbefehle und

c) Anwenderprogrammspeicher, Betriebssystemspeicher und Datenspeicher mit binärem Prozessabbild.

Speicherprogrammierbare Steuerungen sind beispielsweise in der Siemens-Zeitschrift «Energietechnik» 1979, Heft 2, Seiten 43 bis 47 oder in Heft 4, Seiten 136 bis 139 oder in der europäischen Patentschrift 10 170 und den US-Patentschriften 3 921 146 oder 3 942 158 näher beschrieben.

Eine komfortable speicherprogrammierbare Steuerung der eingangs genannten Art soll sowohl logische Verknüpfung von ein Bit breiten Daten durchführen als auch komplexe Funktionen mit wortbreiten Daten, wie z.B. Arithmetikfunktionen, Datentransfer, Zeitenbildung usw., ausführen können.

Es ist daher vorteilhaft, im Rahmen einer speicherprogrammierbaren Steuerung ein Mehrprozessorsystem zu verwenden, bei dem die Ausführung der Binärbefehle einem gesonderten schnellen Bitprozessor übertragen wird, wogegen ein relativ langsamer Wortprozessor die komplexen Funktionen ausführen kann (vgl. z.B. Siemens-Zeitschrift «Energietechnik» 1980, Heft 9, Seite 361).

Da die wortbreite und bitbreite Verarbeitung der Daten gemischt und z.T. abhängig voneinander stattfindet, ist ein spezielles Verfahren zur Kopplung und Synchronisation der Prozessoren erforderlich. Berücksichtigt werden muss dabei ausserdem, dass vom Wortprozessor, sowohl in bestimmten Abständen als auch völlig asynchron zum eigentlichen Programmablauf (Bit- und Wortoperationen), zusätzlich spezielle Routinen abgearbeitet werden müssen.

Bei Bitoperationen können Operand und Parameter direkt im eigentlichen Befehlswort dargestellt und vom Bitprozessor verarbeitet werden. Bei Wortoperationen folgt dem eigentlichen Befehlswort, das die Information über die Art des Wortbefehls enthält, eine variable Anzahl Parameter oder Operanden. Diese müssen beim Erkennen eines Wortbefehls dem Wortprozessor sofort und vollständig zugänglich sein.

Die Aufgabe der vorliegenden Erfindung besteht darin, beim Auftreten eines Wortbefehls im Anwenderprogrammspeicher sofort für den Wortprozessor Befehlsart, Parameter und Operanden zur Verfügung zu stellen. Diese Aufgabe wird erfindungsgemäss durch folgende Merkmale gelöst:

d) der den Anwenderprogrammspeicher sequentiell lesende Bitprozessor übermittelt beim Erkennen eines Wortbefehls eine dem Wortbefehl entsprechende Information zum Wortprozessor und bleibt während der Ausführung des Wortbefehls stehen,

e) der Wortprozessor liest durch Adressieren interner Register des Bitprozessors die zu dem Wortbefehl gehörenden Daten unter der aktuellen Befehlsadresse des Bitprozessors aus dem Anwenderprogrammspeicher über eine Datenweiche aus und

f) die Befehlsadresse des Bitprozessors wird nach jedem Lesezugriff des Wortprozessors auf den Anwenderprogrammspeicher inkrementiert.

Durch die Adressierung des Anwenderprogrammspeichers von der Bitprozessorseite, aber andererseits durch den Datenfluss zum Wortprozessor, ist eine schnellmögliche Parameterversorgung des Wortprozessors realisierbar, wobei jegliche Adressberechnung seitens des Wortprozessors entfällt.

Anhand einer Zeichnung sei die Erfindung näher erläutert; es zeigen:

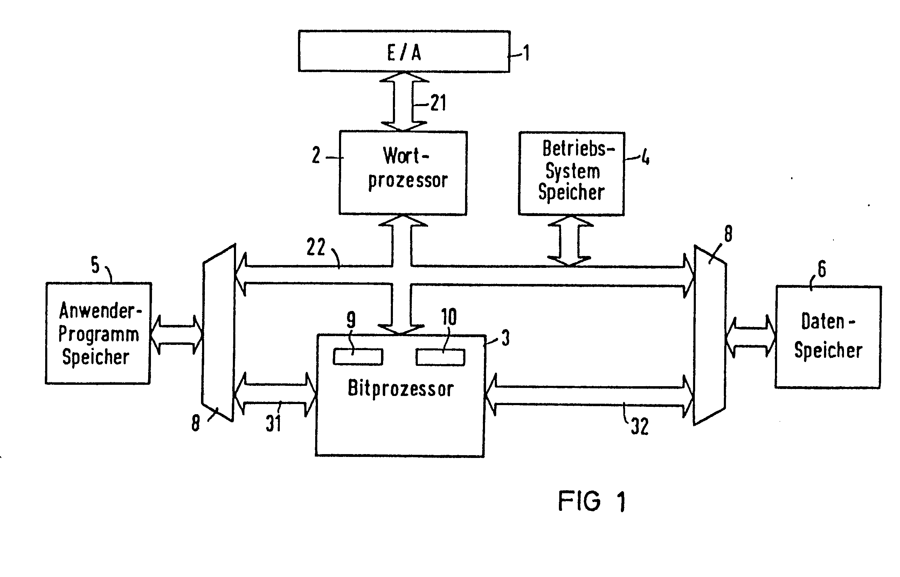

Fig. 1 den prinzipiellen Aufbau des Mehrprozessorsystems,

Fig. 2 den Funktionsablauf bei der Parameterübergabe in Wort- und Bitprozessor und

Fig. 3 die steuerungsmässige Verknüpfung.

Bei dem vorliegenden Mehrprozessorsystem wird die Ausführung der Binärbefehle einem gesonderten schnellen Bitprozessor 3 übertragen, wogegen ein relativ langsamer Wortprozessor 2 die komplexen Funktionen ausführt. Der Wortprozessor 2 verfügt über einen Peripheriebus 21, an den die Ein- und Ausgabebaugruppen 1 von und zum Prozess angeschlossen sind, ferner noch über einen internen Systembus 22, an den Betriebssystemspeicher 4 und über Datenweichen 8 Anwenderprogrammspeicher 5 und Datenspeicher 6 mit Prozessabbild anschliessbar sind. An den gleichen Bus 22 ist auch der Bitprozessor 3 angeschlossen, der über eigene Busse 31 und 32 und über die Datenweichen 8 ausschliesslich Zugriff auf Anwenderprogrammspeicher 5 und Datenspeicher 6 mit Prozessabbild hat. Der Verkehr mit der Peripherie läuft immer über den Wortprozessor 2, der an den Zyklusgrenzen den Zustand aller Eingangsinformationen vom Prozess her in den internen Datenspeicher 6 ablegt und die sich aus den Verknüpfungen ergebenden Ausgangssignale im Datenspeicher 6 am Zyklusende an die Prozessperipherie überträgt. Während des Ablaufs des Programmes wird also nicht direkt mit den eigentlichen Signalen der Prozessperipherie, sondern mit dem internen Prozessabbild im Datenspeicher 6 gearbeitet (vgl. z.B. europäische Patentschrift 10 170). Die Instruktionen über Bit- oder Wortoperationen sind in einer speziellen Programmiersprache verschlüsselt und im Anwenderprogrammspeicher 5 niedergelegt. Diese Instruktionen werden vom Bitprozessor 3 direkt und vom Wortprozessor 2 in bestimmten Routinen abgearbeitet. Diese Programmteile sowie sonstige Betriebssystemroutinen sind im Betriebssystemspeicher 4 des Wortprozessors 2 in der Sprache des verwendeten Mikroprozessors 2 fest niedergelegt.

Kennzeichnend für das Gesamtsystem ist, dass grundsätzlich der Wortprozessor 2 als Standardmikroprozessor und der Bitprozessor 3 jeweils eigene Programmzähler besitzen und zunächst völlig unabhängig und asynchron zueinander arbeiten können.

Der Bitprozessor 3 selbst verhält sich für den Wortprozessor 2 wie ein Speicher bzw. wie ein intelligenter Peripheriebaustein. Er besitzt interne Register, aus denen der Wortprozessor 2 jederzeit den momentanen Status, wie z.B. «Run» oder «Stop», entnehmen kann. Durch Schreibzugriff auf eines dieser Register kann ausserdem der Bitprozessor 3 jederzeit vom Wortprozessor 2 gestartet oder gestoppt werden.

Der Programmzähler zur Abarbeitung des Anwenderprogramms ist Bestandteil des Bitprozessors 3. Dieser holt sich, nachdem er gestartet wurde, Instruktionen aus dem Programmspeicher 5 und unterscheidet diese nach Wort- oder Bitoperationen. Nach Erkennen einer Bitoperation führt er diese selbst sofort aus; wird eine Wortoperation erkannt, übergibt er diese dem Wortprozessor 2 und geht automatisch in den Status «Stop».

Jede Wortoperation wird durch einen Programmteil vom Wortprozessor 2 interpretiert. Die Einsprungadresse A für den einer bestimmten Operation zugeordneten Programmteil D erhält der Wortprozessor 2 nicht direkt über den Code der Wortoperation im Anwenderprogrammspeicher 5, sondern über eine zwischengeschaltete Steuereinheit mit Speicher 9 im Bitprozessor, die vom Wortprozessor laufend abgefragt wird. Der Code der Wortoperation bildet die Adresse für eine bestimmte Speicherzelle des Speichers 9, unter welcher als Datum die Einsprungadresse des entsprechenden Programmteils verzeichnet ist. Auf diese Weise wird erreicht, dass bei festem Befehlscode der Wortoperation die Einsprungadressen in die zugeordneten Programmteile variabel gehalten werden können. Der Speicher 9 kann auch entfallen, wenn der Wortprozessor 2 sich die Einsprungadresse aus den vom Bitprozessor 3 vorgegebenen Informationen per Programm ermittelt.

Ist der Programmzähler des Bitprozessors durch den Wortprozessor mit einem definierten Wert vorbesetzt worden, wird der Bitprozessor gestartet. Der Bitprozessor läuft an und übernimmt seine Aufgaben. Trifft der Bitprozessor 3 auf eine Wortoperation im Anwenderprogrammspeicher 5, so erzeugt er aus dem Code der Operation die Einsprungadresse in den entsprechenden Programmteil des Wortprozessors 3 und bleibt stehen. Er wartet dann auf Parameteranforderung oder erneuten Start durch den Wortprozessor. Der Programmzähler des Bitprozessors zeigt jetzt, da er nach jedem Lesezugriff inkrementiert wird, auf den ersten Parameter bzw. Operanden der Wortoperation. Nachdem der Wortprozessor aufgrund des Inhalts des Speichers des Bitprozessors 3 in sein entsprechendes Programmteil verzeigt hat, benötigt er die entsprechenden Parameter und Operanden.

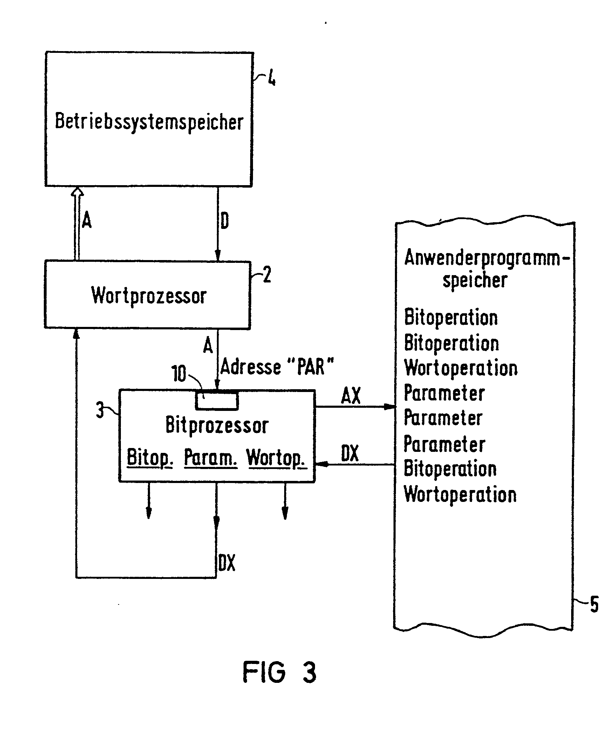

Zu diesem Zweck wird für jeden Parameter oder Operanden ein Lesezugriff PAR (vgl. Figur 3) auf zwei weitere interne Register des Bitprozessors vorgenommen. Dieser Lesezugriff PAR veranlasst die Datenweiche 8 zwischen Anwenderprogrammspeicher 5 und Bitprozessor 3 zu einer zusätzlichen Funktion. Hierbei werden dem Anwenderprogrammspeicher 5 zwar die Adressleitungen des Bitprozessors 3, d.h. der aktuelle Programmzähler, jedoch Daten- und Steuerleitungen des Wortprozessors 2 aufgeschaltet.

Auf diese Weise liest der Wortprozessor 2 unter den virtuellen Adressen PAR der zwei entsprechenden internen Register des Bitprozessors 3 mit der physikalischen Adresse AX des aktuellen Programmzählers des Bitprozessors 3 den aktuellen Operanden oder Parameter DX der Wortoperation ein. Durch den Lesezugriff des Wortprozessors 2 auf diese internen Register des Bitprozessors wird zusätzlich wieder automatisch der Programmzähler des Bitprozessors 3 inkrementiert ($AX = AX + 1$) und zeigt auf die nächste Bitoperation oder den nächsten Operanden oder Parameter der aktuellen Wortoperation.

Auf diese Weise kann eine Wortoperation beliebig viele Parameter bzw. Operanden enthalten, der zugehörige Programmteil des Wortprozessors muss lediglich dafür sorgen, dass bei einem erneuten Start des Bitprozessors 3 dessen Programmzähler wieder auf die nächste Bit- oder Wortoperation zeigt. Dies geschieht automatisch, wenn der letzte Operand oder Parameter eingelesen wurde und der Programmzähler des Bitprozessors 3 wiederum inkrementiert wird. Während des gesamten Vorgangs befindet sich der Bitprozessor im Status «Halt». Am Ende des Programmteils für die Wortoperation muss er vom Wortprozessor wieder gestartet werden.

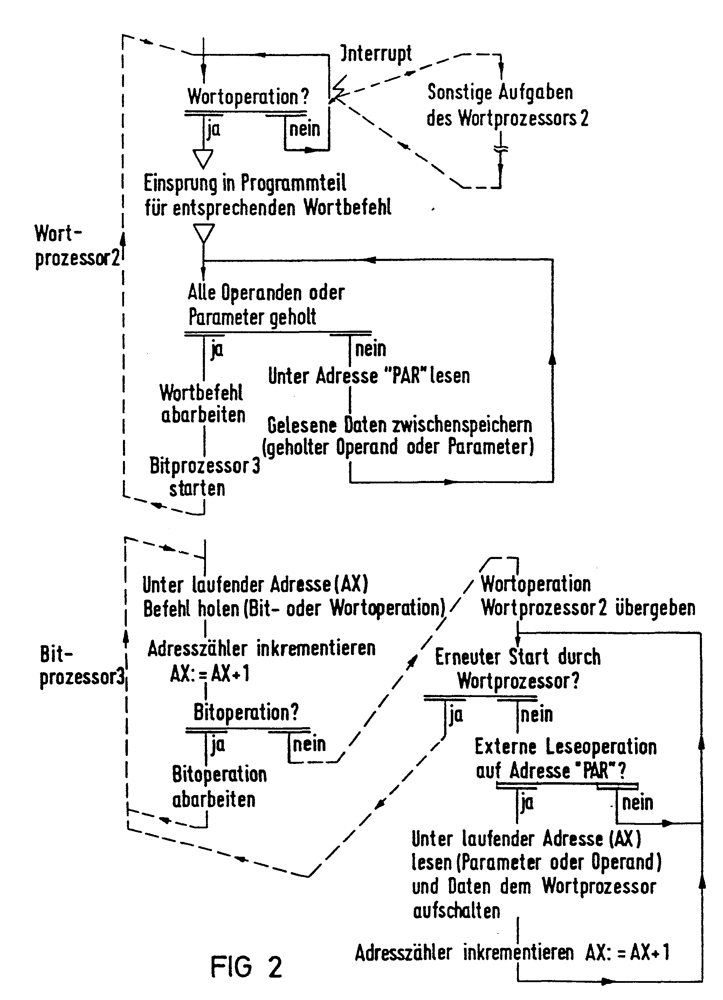

Die vorstehend genannten Abläufe sind auch schematisch als Funktionsablauf in Figur 2 dargestellt.

Durch die Zusatzfunktion der zum Bitprozessor 3 gehörenden Weiche 8, nämlich die Adressierung des Anwenderprogrammspeichers 5 von der einen Prozessorseite her, der Ermöglichung des Datenflusses jedoch zur anderen Prozessorseite hin und durch das automatische Inkrementieren des Programmzählers im Bitprozessor nach Zugriff auf dessen spezielle interne Register ist eine schnellstmögliche Parameterversorgung des Wortprozessors bei Bearbeitung eines Wortbefehls erreichbar.

Es entfällt jegliche Adressberechnung seitens des Wortprozessors, weiterhin ist der aktuelle Programmzählerstand des Bitprozessors für den Wortprozessor belanglos. Der Wortprozessor 2 muss daher nicht z.B. indiziert oder über die berechneten Adressen auf den Parameter zugreifen, sondern erhält sie über einfache Lesezugriffe von konstanter Adresse. Weiterhin entfällt das Korrigieren des Programmzählers im Bitprozessor, da dieser nach Einlesen aller Parameter automatisch wieder auf die nächste Bit- oder Wortoperation im Anwenderprogrammspeicher 5 zeigt.

Neben den schnellen Reaktionszeiten liegen die Hauptvorteile dieser Lösung in dem geringen Aufwand, der einfachen Synchronisierungsmöglichkeiten zwischen Wort- und Bitprozessor und der Unabhängigkeit vom Typ des Wortprozessors.

## Patentansprüche

1. Speicherprogrammierbare Steuerung mit zyklisch durchlaufendem Programm, bestehend zumindest aus

a) einem Wortprozessor zur Bearbeitung von Betriebssystem- und Wortbefehlen,

b) einem Bitprozessor zur Bearbeitung binärer Verknüpfungsbefehle,

c) Anwenderprogrammspeicher, Betriebssystemspeicher und Datenspeicher mit binärem Prozessabbild,
gekennzeichnet durch folgende Merkmale:

d) der den Anwenderprogrammspeicher (5) sequentiell lesende Bitprozessor (3) übermittelt beim Erkennen eines Wortbefehls eine dem Wortbefehl entsprechende Information zum Wortprozessor (2) und bleibt während der Ausführung des Wortbefehls stehen,

e) der Wortprozessor (2) liest durch Adressieren (PAR) interner Register (10) des Bitprozessors (3), die zu dem Wortbefehl gehörenden Daten (DX) unter der aktuellen Befehlsadresse (AX) des Bitprozessors (3) aus dem Anwenderprogrammspeicher (5) über eine Datenweiche (8) aus und

f) die Befehlsadresse (AX) des Bitprozessors (3) wird nach jedem Lesezugriff des Wortprozessors (2) auf den Anwenderprogrammspeicher (5) inkrementiert.

2. Speicherprogrammierbare Steuerung nach Anspruch 1, dadurch gekennzeichnet, dass die zwischen dem Anwenderprogrammspeicher (5) und dem Bitprozessor (3) angeordnete Datenweiche (8) bei der Parameterversorgung dem Anwenderprogrammspeicher (5) die Adressleitungen des Bitprozessors (3) und die Daten- und Steuerleitungen des Wortprozessors (2) aufschaltet.

## Claims

1. A store-programmable control unit with a programme which is run cyclically, comprising at least

a) a word processor for the processing of operations system commands and word commands,

b) a bit processor for the processing of binary logic-linking commands,

c) user programme store, operations system store and data store with binary display, characterised by the following features:

d) on the recognition of a word command the bit processor (3) which sequentially reads the user programme store (5) transfers an item of information corresponding to the word command to the word processor (2) and remains at a halt during the execution of the word command,

e) by addressing (PAR) internal registers (10) of the bit processor (3), the word processor (2) reads out from the user programme store (5), via a data separating filter (8), the data (DX), assigned to the word command, under the current command address (AX) of the bit processor (3) and

f) the command address (AX) of the bit processor (3) is incremented following each read access of the word processor (2) to the user programme store (5).

2. A store-programmable control unit as claimed in claim 1, characterised in that for the parameter processing the data separating filter (8), which is arranged between the user programme store (5) and the bit processor (3), connects the user programme store (5) to the address lines of the bit processor (3) and the data- and control lines of the word processor (2).

## Revendications

1. Commande à programme mémorisé, à programme exécuté cycliquement, comprenant au moins:

a) un processeur de mots pour le traitement d'instructions du système d'exploitation et d'instructions de mots;

b) un processeur de bits pour le traitement d'instructions binaires d'enchaînement; et

c) une mémoire à programme utilisateur, une mémoire du système d'exploitation et une mémoire de données avec représentation binaire du processurs; caractérisée en ce que:

d) le processeur de bits (3), qui lit séquentiellement la mémoire à programme utilisateur (5), transmet, à la reconnaissance d'une instruction de mot, une information qui correspond à cette instruction au processeur de mots (2), et s'arrête pendant l'exécution de cette instruction;

e) le processeur de mots (2) lit, dans la mémoire à programme utilisateur (5), à travers un aiguillage de données (8), par adressage (PAR) de registres internes (10) du processeur de bits (3), les données (DX) associées à l'instruction de mot, sous l'adresse d'instruction actuelle (AX) du processeur de bits (3); et

f) l'adresse d'instruction (AX) du processeur de bits (3) est incrémentée après chaque accès de lecture du processeur de mots (2) à la mémoire de programme utilisateur (5).

2. Commande selon la revendication 1, caractérisée en ce que l'aiguillage de données (8) disposé entre la mémoire à programme utilisateur (5) et le processeur de bits (3), connecte à la mémoire de programme utilisateur (5), lors de l'application des paramètres, les lignes d'adresses du processeur de bits (3) et les lignes de données et de commande du processeur de mots (2).

FIG 1

Interrupt

Wortoperation?

| ja | nein |

Sonstige Aufgaben
des Wortprozessors 2

Einsprung in Programmteil
für entsprechenden Wortbefehl

Wortprozessor 2

Alle Operanden oder
Parameter geholt

| ja | nein |

Wortbefehl
abarbeiten

Unter Adresse "PAR" lesen

Gelesene Daten zwischenspeichern
(geholter Operand oder Parameter)

Bitprozessor 3
starten

Unter laufender Adresse (AX)
Befehl holen (Bit- oder Wortoperation)

Wortoperation
Wortprozessor 2 übergeben

Bitprozessor 3

Adresszähler inkrementieren
AX: = AX+1

Erneuter Start durch
Wortprozessor?

| ja | nein |

Bitoperation?

| ja | nein |

Externe Leseoperation
auf Adresse "PAR"?

| ja | nein |

Bitoperation
abarbeiten

Unter laufender Adresse (AX)
lesen (Parameter oder Operand)
und Daten dem Wortprozessor
aufschalten

FIG 2

Adresszähler inkrementieren AX: = AX+1

7

FIG 3